# EUROPÄISCHE PATENTSCHRIFT

(11) **EP 0 450 309 B1**
(45) Veröffentlichungstag und Bekanntmachung des Hinweises auf die Patenterteilung: **19.10.1994**
(21) Anmeldenummer: 91103067.4
(22) Anmeldetag: 01.03.1991
(51) Int. Cl.: A21C 3/02

(54) **Abstreifvorrichtung und Teigwalzmaschine**
Scraper device and dough rolling machine
Raclette et appareil à rouler la pâte

(30) Priorität: 19.04.1990 DE 4012495; 06.04.1990 DE 4011137
(43) Veröffentlichungstag der Anmeldung: 09.10.1991
(73) Patentinhaber: A. FRITSCH GMBH & CO. KG, D-97348 Markt Einersheim (DE)
(72) Erfinder: Bernhardt, Udo, W-8711 Markt Einersheim (DE)
(74) Vertreter: Matschkur, Götz, Lindner Patent- und Rechtsanwälte

(56) Entgegenhaltungen:
- FR-A- 1 480 122

## Beschreibung

Die Erfindung richtet sich auf eine Abstreifvorrichtung für Teigwalzmaschinen, die einen Durchgangsspalt verstellbar begrenzende Druckwalzen aufweisen, wobei zwei Abstreifer je an einer Anstellstange angelenkt und mittels Federkraft an je eine Druckwalze zu deren Reinigung anlegbar sind, sowie auf eine entsprechend ausgerüstete Teigwalzmaschine mit einem parallel und/oder synchron zum Spalt-Verstellhub einer Walze geführten Mitnehmer für den dieser Walze zugeordneten Abstreifer.

Derartige Anordnungen sind in der Patentveröffentlichung EP-A-0 270 488 beschrieben: Zwischen zwei Teigzuführbändern befindet sich eine untere, um eine ortsfeste Achse drehbare Druckwalze, über der eine zweite, zur unteren Walze parallele Druckwalze höhenverstellbar angeordnet ist. Jeder Druckwalze sind zwei langgestreckte Abstreifer zugeordnet, die symmetrisch zu der von den Walzenachsen aufgespannten Mittelebene angeordnet sind. Die Abstreifer sind in Vierkant- bzw. Winkelprofilen eingespannt, welche um ihre zu den Walzenachsen parallelen Längsachsen verschwenkbar angeordnet sind.

Im Bereich der Stirnseiten dieser Profile sind dem betreffenden Abstreifer bezüglich der jeweiligen Schwenkachse etwa diametral gegenüberliegende Laschen angeordnet, welche solchermaßen mit dem jeweiligen Abstreifer in Form eines doppelarmigen Hebels zusammenwirken. An den freien Enden der von der betreffenden Druckwalze weg gerichteten Befestigungslaschen ist je eine Einhängeöse für eine Zugfeder vorgesehen. Die an der selben Seite bezüglich des zwischen den Walzen gebildeten Teigdurchgangsspalts sowie an den selben Stirnseiten der die Abstreifer tragenden Profile befindlichen Befestigungslaschen sind vermittels je einer in die betreffenden Einhängeösen eingehängten Zugfeder miteinander gekoppelt. Die von diesen Zugfedern ausgeübte Zugkraft drückt aufgrund der doppelarmigen Hebel die betreffenden Abstreifer auseinander, so daß diese an der Mantelfläche je einer Druckwalze zur Anlage gelangen.

Damit die oberen Abstreifer bei vollständig angehobener, oberer Druckwalze nicht in den Bereich des verdickten, zugeführten Teigstrangs gelangen, werden sie ebenfalls angehoben. Dies wird dadurch bewerkstelligt, daß die Verschwenkachsen der oberen Abstreifer nicht am Gehäuse der Teigwalzmaschine ortsfest gelagert sind, sondern in je zwei stirnseitigen Hebeln, welche einerseits oberhalb des betreffenden Teigzuführbandes am Chassis der Teigwalzmaschine angelenkt sind und mit ihrem anderen Ende auf der Drehachse der oberen Druckwalze aufliegen. Etwa mittig zwischen diesen beiden Hebelenden befindet sich der Anlenkpunkt für die Schwenkachse eines der beiden oberen Abstreifer.

Beim Anheben der oberen Druckwalze verschwenken sämtliche vier, auf deren Drehachse aufliegende Hebel um ihren Anlenkpunkt am Chassis der Teigwalzmaschine nach oben. Hierdurch werden auch die Abstreifer angehoben. Hierdurch wird zwar gewährleistet, daß die oberen Abstreifer auch bei angehobener oberer Druckwalze nicht in Konflikt mit dem zugeführten Teigstrang geraten, die Anordnung weist jedoch dennoch eine Reihe von Nachteilen auf:
Die jeweils unteren der miteinander gekoppelten Abstreifer sind am Chassis der Teigwalzmaschine verschwenkbar angelenkt, so daß ein Lösen derselben aus der Teigwalzmaschine, was vor allem zu Reinigungszwecken regelmäßig erforderlich ist, einen erheblichen Montageaufwand darstellt und somit sehr unwirtschaftlich ist.

Die Federkonstante der Zugfedern muß entsprechend der Maximalweite des Teigdurchgangsspalts dimensioniert werden, damit bei maximal gedehnter Zugfeder die Abstreifer nicht übermäßig an die Walze angepreßt werden, was zu einem erhöhten Verschleiß der Walzen und/oder Abstreifer führen würde. Daher ist bei Minimalabstand der Druckwalzen die von den Zugfedern aufgebrachte Anpreßkraft nur sehr gering, so daß insbesondere die unteren Abstreifer aufgrund der ungünstigen Gewichtsverteilung nur unzureichend an der Mantelfläche der Druckwalze angepreßt werden. Sofern aber ein ausreichender Kontakt zwischen den Abstreifern und den Druckwalzen nicht gewährleistet ist, ist deren Funktion höchst fragwürdig, denn wenn ein Abstreifer einmal von der Teigbahn erfaßt und von der Mantelfläche der entsprechenden Druckwalze angehoben ist, ist die relativ geringe Restkraft der nahezu vollständig zusammengeschobenen Zugfedern nicht mehr in der Lage, den betreffenden Abstreifer zu stabilisieren. Dieser wird von der darüber hinweg transportierten Teigbahn regelrecht hochgeklappt und kerbt die Teigbahn dabei ein, so daß diese abreißt. Bei der vorbekannten Anordnung ist demnach insbesondere das Auswalzen eines dünnen Teigstrangs äüßerst kritisch.

Demgegenüber wird beim Auswalzen eines dicken Teigstrangs die obere Druckwalze vollständig angehoben, wobei die oberen Absteifer aufgrund ihrer Anlenkung an beweglichen, auf der Drehachse der oberen Walze einseitig aufliegenden Hebel nicht um das selbe Maß angehoben werden. Zwar tragen die Zugfedern in Zusammenwirkung mit den um ihre Längsachsen verschwenkbaren Halteprofilen dazu bei, daß die oberen Abstreifer dennoch an der Mantelfläche der oberen Druckwalze anliegen. Jedoch verändert sich diese Schwenkbewegung um die Längsachse des betreffenden Halteprofils der Anstellwinkel des Abstreifers gegenüber der Mantelfläche der oberen Druckwalze. In Zusammenwirken mit der in diesem Zustand erhöhten Federkraft führt dies zu einem starken Verschleiß der oberen Abstreifer und/oder der Mantelfläche der oberen Druckwalze.

Aus diesen Nachteilen des Stands der Technik resultiert das der Erfindung zugrundeliegende Problem, eine Abstreifvorrichtung für Teigwalzmaschinen mit zwei einen gemeinsamen Durchgangsspalt verstellbar begrenzenden Druckwalzen so auszugestalten, daß die Abstreifer problemlos aus der Teigwalzmaschine zu Reinigungszwecken entnommen und genau so schnell wieder eingesetzt werden können, wobei zusätzlich Sorge dafür getragen werden soll, daß die Anpreßkraft sowie der Anstellwinkel der Abstreifer gegenüber der Mantelfläche der betreffenden Druckwalze möglichst unabhängig vom eingestellten Abstand der beiden Druckwalzen sind. Zu diesem Zweck sieht die Erfindung bei einer Abstreifvorrichtung für Teigwalzmaschinen mit zwei Abstreifern, die je an einer Anstellstange angelenkt und mittels Federkraft an je eine von einem Paar Druckwalzen, die einen gemeinsamen Teig- Durchgangsspalt verstellbar begrenzen, zu deren Reinigung anlegbar sind, vor, daß die beiden Abstreifer über ihre jeweiligen Anstellstangen durch eine Gelenkstelle miteinander verbunden sind, die für die beiden Abstreifer eine gemeinsame Schwenkachse zum Anlegen an die jeweilige Druckwalze bildet. Durch die gelenkige Verbindung zwischen den im Bereich der Stirnseiten der Druckwalzen angeordneten Anstellstangen sowie je einem Abstreifer ist es möglich, den Anstellwinkel der Abstreifer bezüglich der Mantelfläche der betreffenden Druckwalze unabhängig von dem Verschwenkwinkel der Anstellstangen vorzugeben und dadurch konstant zu halten. Ein weitere Vorteil der Erfindung ist, daß keine der erfindungsgemäßen Anstellstangen an dem Chassis der Teigwalzmaschinen direkt gelagert ist. Vielmehr sind jeweils zwei Anstellstangen gelenkig miteinander verbunden, so daß sich eine Baugruppe ergibt, die beispielsweise in entsprechende Führungselemente eingesetzt werden kann und dort durch die Anpreß- Federkraft eines oder mehrerer Federelemente gehalten wird. Zum Ausbau einer solchen Abstreifvorrichtung müssen daher keinerlei Verschraubungen gelöst werden, so daß Ausals auch Einbau in Sekundenschnelle bewerkstelligt werden können. Da die Anstellstangen in ihrem äußeren Bereich nur gegeneinander, nicht aber auch am Chassis der Teigwalzmaschine gelagert sind, ist die Konstruktion dieser Anstellstangen nahezu beliebig, so daß durch eine geeignete Fornmgebung dafür Sorge getragen werden kann, daß die Anpreßkraft der Abstreifer an die Mantelflächen der entsprechenden Druckwalzen weitgehend unabhängig vom Abstand der Druckwalzen sind.

In Konkretisierung des Erfindungsgedankens ist die Federkraft an je einer der aneinadergelenkten Abstreiferstangen zu deren Verschwenkung gegeneinander in Angriff gebracht. Zur Ausübung der Federkraft ist mit Vorteil ein Federelement vorgesehen, das mit seinen beiden Enden an je einer der beiden Anstellstangen in Angriff gebracht ist und auf der dem Walzen-Durchgangsspalt zugeordneten Seite verläuft. Um für das Federelement den Auslenkweg gegenüber dem gesamten Verstellweg des Druckwalzenspaltes zu verkleinern, ist in Weiterbildung der Erfindung vorgesehen, daß der Angriffspunkt des Federelements näher zur Gelenkstelle als zum Abstreifer angeordnet ist. Hierdurch ist der Radius zwischen Gelenkstelle und Federelementangriffspunkt verkleinert, der den Auslenkhub des Federelements bestimmt. Bei dieser Ausführung ist es ferner von Vorteil, wenn ein für Belastung auf Druck ausgebildetes Federelement vorgesehen wird, da es an je einer Stange angelenkt ist und zu deren Auseinanderspreizen angreift. Die so gebildete Aufspreizfeder drückt das scherenartige Hebelgestänge mit je einem Abstreifer am Ende auseinander, wobei die Abstreifer an den jeweiligen Walzenaußenmantel gedrückt werden.

Bei Verschwenken der gelenkig miteinander verbundenen Abstreiferstangen wird auch die Winkelstellung des Abstreifers gegenüber der Walzenmantel-Außenfläche verändert, selbst wenn das Verschwenken synchron zur linearen Verstellung eines oder beider Walzen zwecks Variation der Spalthöhe bzw. -breite erfolgt. In dieser Hinsicht besteht eine vorteilhafte Ausbildung der Erfindung darin, daß der Abstreifer an einem länglichen Zwischenglied ortsfest angebracht ist, das an der zugeordneten bzw. benachbarten Anstellstange angelenkt ist. Wird diese Abstellstange beispielsweise synchron mit der Walzenspaltverkleinerung nach unten verschwenkt, kann der Abstreifer bzw. das diesen fixiert bzw. ortsfest tragende Zwischenglied um die Gelenkstelle zur nächstliegenden Anstell- bzw. Abstreiferstange eine ausgleichende Schwenkbewegung durchführen, um eine Winkelbewegung der Anstellstange zu kompensieren und dabei den Anstellwinkel für den Abstreifer gegenüber der Walzenmantelfläche konstant zu halten. Zweckmäßig sind die Anlenkung des Zwischenglieds und die Anlenkung der Anstellstangen aneinander jeweils durch Scharniergelenke realisiert, deren Achsen parallel zueinander und/oder zu den Walzenachsen verlaufen.

Damit Möglichkeiten vorliegen, die Abstreifer entweder im zuvor genannten Sinne mit höhenverstellbaren Walzen zu koppeln bzw. zu synchronisieren oder am Maschinengehäuse in Eingriff zu bringen, ist in Weiterbildung der Erfindung vorgesehen, daß der Abstreifer ein parallel oder quer zur Gelenk- und/oder Walzenachse vorspringendes, gleit- oder rollbares Tast- oder Führungselement besitzt, beispielsweise in Form eines Bolzens oder Steges.

Um die von der Erfindung geschaffene Möglichkeit, aufgrund der gelenkigen Verbindung zwischen den Abstreifern und den betreffenden Anstellstangen einen konstanten Anstellwinkel der Abstreiferflächen gegenüber der Walzenmantelfläche auch bei Verstellung der zu säubernden Walze einzuhalten, in die Praxis umzusetzen, ist bei einer Teigwalzmaschine mit zwei einen gemeinsamen Durchgangsspalt verstellbar begrenzenden Druckwalzen und mit paarweise zusammengefaßten Abstreifern, die je an eine der beiden Druckwalzen zu deren Reinigung anlegbar sind, ein parallel und/oder synchron zum Spalt-Verstellhub einer Walze geführter Mitnehmer für die dieser Walze zugeordneten Abstreifer vorgesehen, wobei der Mitnehmer auf der Achse der Walze drehgelagert ist. Mit anderen Worten, der Mitnehmer übertragt die Verstellbewegung der Walze bspw. zur Verkleinerung des Spalts auf den an der Walze anliegenden Abstreifer; ist dieser mit dem obenerwähnten Zwischenglied versehen, kann die mit der vom Mitnehmer erteilten Winkelbewegung eihergehende Winkelveränderung gegenüber der Vertikalen durch eine entsprechend überlagerte Gergen-Winkelbewegung aufgrund des angelenkten Zwischenglieds für den Abstreifer aufgehoben werden. Ein weiterer Vorteil des Mitnehmers besteht darin, daß auch bei großem Walzenspalt die Distanz zwischen einer an die unterste Mantellinie der oberen Walze gelegte waagrechten Tangential-Ebene und der Unterseite des der oberen Walze zugeordneten Abstreifers immer noch ausreichend ist, um beim Auswalzen eines dicken Teigbandes ein Anstehen an dem (oberen) Abstreifer zu vermeiden. Durch die Lagerung des Mitnehmers an der Achse der verstellbaren Walze ist gewährleistet, daß beide Linearbewegungen miteinander synchronisiert sind. Wenn die betreffenden Abstreifer in dem Mitnehmer bspw. durch entsprechende Führungen unverdrehbar festgelegt sind, verändert sich ihr Anstellwinkel zur Mantelfläche der betreffenden Druckwalze nicht, selbst wenn sich der Mitnehmer gegenüber dem Chassis der Teigwalzmaschine um die Längsachse der Druckwalze geringfügig verdreht. Da sich auch die obere höhenverstellbare Walze während des Auswalzvorgangs verdreht, ist es unabdingbar, daß der Mitnehmer auf der Achse, Antriebswelle oder dergleichen der Walze drehgelagert ist. Zur Verbindung des Mitnehmers mit dem mitzunehmenden Abstreifer besteht eine Ausbildung der Erfindung darin, daß der Mitnehmer eine Raste für den Eingriff durch den Abstreifer oder einen diesen tragende Stange bzw. tragendes Gestängeglied aufweist.

Eine spezielle Realisierung des Mitnehmers besteht in der Form einer Platte, die gegenüber oder am Maschinengehäuse linear geführt ist; alternativ kann auch ein am Maschinengehäuse angelenkter Führungshebel vorgesehen sein, dessen dem Anlenkpunkt abgewandtes Ende mit der Platte (gelenkig) verbunden ist.

Zur Schaffung von Kupplungsmöglichkeiten des Mitnehmers mit dem Abstreifer weist gemäß einer Erfindungsausbildung der Mitnehmer eine Führungsaussparung aus, in die ein (komplementäres) Tast- oder Führungselement des zugeordneten Abstreifers mit Spiel aufnehmbar ist. Aufgrund des möglichen Bewegungsspiels kann der Abstreifer bei Mitnahme noch Ausgleichbewegungen beispielsweise zur Beibehaltung eines konstanten Anstellwinkels durchführen.

Die Montier- und Wartbarkeit der erfindungsgemäßen Teigwalzmaschinen erhöht es, wenn in Weiterbildung der Erfindung die Führungsaussparung nach außen offen, einen in Federkraftrichtung verlaufenden Längsabschnitt und einen im Eintrittsbereich die Öffnung zur Führungsaussparung verengend vorspringenden Einrastzapfen oder -haken aufweist. Der Abstreifer kann so leicht in die offene Führungsaussparung eingesetzt werden, wobei er durch den Einrastzapfen oder -haken am Austreten gehindert ist; erst durch Verschiebung gegen die Federkraft längs des Aussparungslängsabschnitts kann der Einrastzapfen überwunden und der Abstreifer zu Wartungsarbeiten oder dergleichen wieder herausgenommen werden. Dem gleichen Gesichtspunkt trägt auch eine andere Ausbildung der Erfindung Rechnung, nach der eine quer zur Walz- und/oder Gelenkachse (eines Abstreifers) verlaufende Längsführung am Maschinengehäuse vorgesehen ist, die vorzugsweise vertikal gerichtet ist, und mit der ein Führungselement des an einer Walze anliegenden Abstreifers in Eingriff bringbar ist. Stehen von zwei miteinander über ein gegebenenfalls scherenartiges Hebelgestänge miteinander gekoppelten Abstreifern einer in Eingriff mit dem genannten Mitnehmer, während der andere in die Längsführung (beispielsweise Längsschlitz) eingerückt ist, läßt sich diese Abstreifvorrichtung leicht von der Maschine lösen: die beiden Abstreifer werden parallel zur Federkraftrichtung aufeinander zubewegt, gegebenenfalls entgegen der Federkraft zusammengedrückt und können dabei aus der Führungsaussparung einerseits und der Längsführung andererseits austreten und von der Maschine entnommen werden.

Weitere Merkmale, Einzelheiten und Vorteile der Erfindung ergeben sich aus der nachfolgenden Beschreibung eines bevorzugten Ausführungsbeispiels der Erfindung sowie anhand der Zeichnung. Darin zeigen:
- Fig. 1: eine perspektivische Seitenansicht auf eine erfindungsgemäße Abstreifvorrichtung,
- Fig. 2: eine perspektivische Ansicht auf den den Durchgangsspalt der Walzen umfassenden Teil einer erfindungsgemäßen Teigwalzmaschine ohne, d. h. bei ausgebauter Abstreifvorrichtung,
- Fig. 3: eine Seitenansicht auf eine erfindungsgemäße Teigwalz- und Abstreifanordnung bei maximalen Durchgangsspalt, und
- Fig. 4: eine Fig. 3 entsprechende Ansicht bei minimalem Durchgangsspalt.

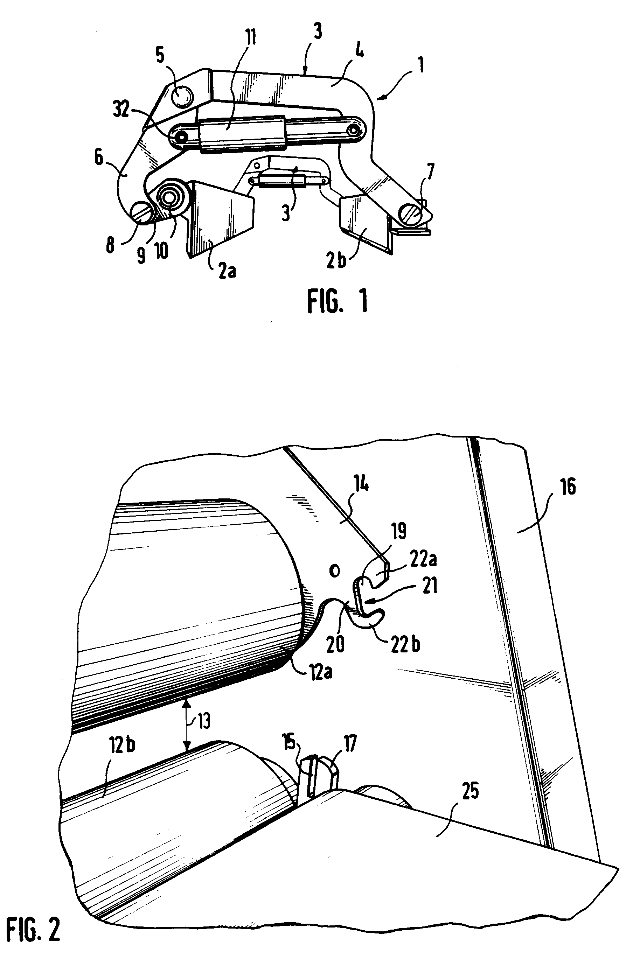

In Fig. 1 ist eine von der Teigwalzmaschine gelöste Abstreifvorrichtung 1 dargestellt, die eine obere Abstreifplatte 2a und eine untere Abstreifplatte 2b aufweist, welche jeweils etwa die Länge der Druckwalzen der Teigwalzmaschine (vgl. Fig. 2) durchmessen. Die beiden Abstreifplatten 2a und 2b sind an ihren beiden voneinander abgewandten Längsseiten jeweils über ein Hebelgestänge 3 gekoppelt, das eine längere Stange 4 und eine damit durch ein Gelenk 5 verbundene kürzere Stange 6 umfaßt. An dem der Gelenkstelle 5 abgewandten Ende der längeren Stange 4 ist die untere Abstreifplatte 2b dreh- bzw. schwenkbar gelagert (Drehscharnier 7). Am dem Gelenk 5 abgewandten Ende der kürzen Stange 6 ist über ein Schwenkscharnier 8 ein etwa zungenartiges Zwischenglied 9 angelenkt, an dessen ausbauchend erweiterten Bereich die obere Abstreifplatte 2a durch einen Befestigungsbolzen 10 für den laufenden Abstreifbetrieb ortsfest fixiert ist. Etwa in der Schwenkebene des Hebelgestänges 3 zwischen dem Gelenk 5 einerseits und dem Dreh- und Schwenkscharnieren 7, 8 andererseits ist ein auf Druckbelastung auslenkbares und teleskopartig verstellbares Federelement 11 mit seinen beiden Enden an je einer der beiden Stangen 4, 6 angelenkt. Das in der perspektivischen Ansicht entfernt dargestellte Hebelgestänge ist bezüglich der mittleren Querachse symmetrisch aufgebaut.

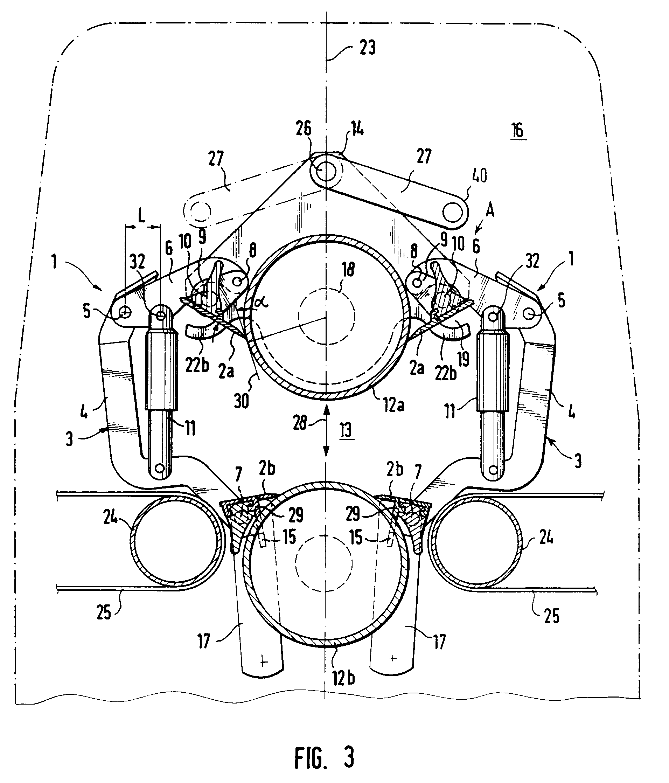

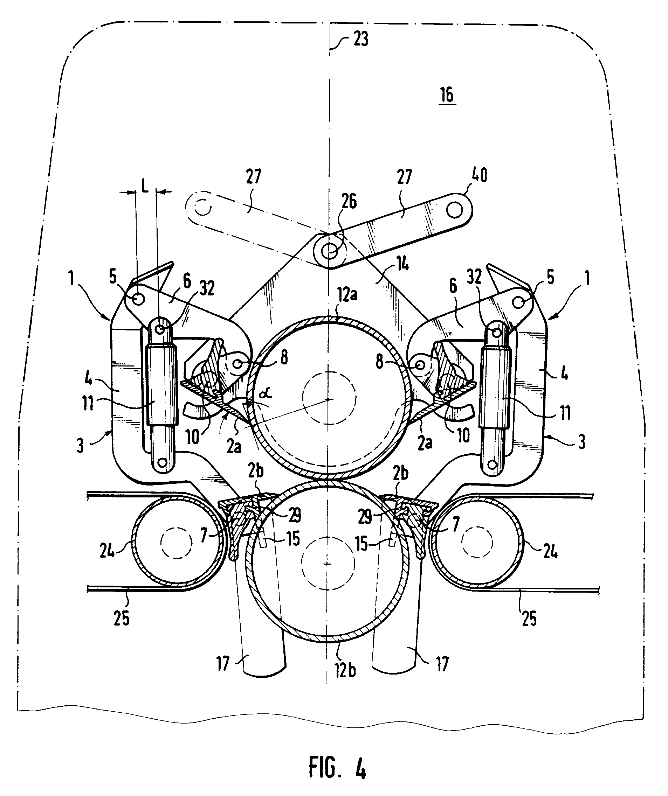

Zum Einbau einer derartigen Abstreifvorrichtung eignet sich der in Fig. 2 gezeigte, erfindungsspezifische Teil der Teigwalzmaschine: Eine obere Druckwalze 12a und eine untere Druckwalze 12b bilden einander gegenüberliegend einen gemeinsamen Teig-Durchgangsspalt 13, der durch eine vertikale Linearbewegung beispielsweise der oberen Druckwalze 12a vergrößert oder verkleinert werden kann. Speziell dem Anbau der Abstreifvorrichtung dient einerseits eine Mitnehmerplatte 14 und andererseits ein Längsschlitz 15, der in einem an der Innenwand des Maschinengehäuses 16 befestigten Flacheisen 17 ausgebildet ist. Die Mitnehmerplatte 14 dagegen ist gegenüber dem Maschinengehäuse 16 linear beweglich angeordnet, indem sie auf der Walzenantriebswelle 18 drehgelagert angebracht ist (vgl. auch unten zu Fig. 3 und 4). Zur Herstellung des Eingriffs mit einem Abstreifer ist die Mitnehmerplatte 14 in ihrem quer zur Walzenachse vorspringenden Abschnitt mit einer nutenartigen Führungsaussparung 19 versehen, die einen etwa vertikal verlaufenden Längsabschnitt 20 und eine dazu querverlaufende Eintrittsöffnung 21 aufweist, die beidseitig verengt von vorspringenden, oberen und unteren Einrasthaken 22a, 22b begrenzt ist. Aufbau und vor allen Funktionsweise der aus Teigwalzmaschine und Abstreifvorrichtung gebildeten erfindungsgemäßen Anordnung werden nachfolgend anhand von Fig. 3 und 4 weiter erläutert.

Gemäß Fig. 3 sind die obere Druckwalze 2a und die untere Druckwalze 2b zur Bildung des (weit) geöffneten Teig-Durchgangsspaltes 13 in vertikaler Flucht beabstandet. Die gesamte Anordnung ist bezüglich der quer zu den Druckwalzen 12a, 12b verlaufenden Symmetrieachse 23 spiegelgleich aufgebaut. Wie an sich bekannt, sind beidseits der unteren Druckwalze 12b Bandantriebswalzen 24 mit Teigtransportbändern 25 vorgesehen. Die Mitnehmerplatte 14 weist etwa auf der Flucht der Symmetrieachse 23 ein Lenkscharnier 26 auf, an dem eine Lenkstange 27 mit seinem einen Ende und mit seinem anderen Ende 40 am Gehäuse 16 angelenkt ist. Diese Anordnung, die (wie gestrichelt angedeutet) beidseits der Symmetrieachse 23 denkbar ist, ermöglicht für die Mitnehmerplatte 14 näherungsweise eine vertikale Linearbewegung parallel und synchron zur Spalt-Verstellbewegung 28 der oberen Druckwalze 12a. Die Abstreifvorrichtung 1 ist gegenüber dem Gehäuse 16 fixiert, indem der untere Abstreifer 2b ein Winkelprofil 29 besitzt, das in den Längsschlitz 15 des Flacheisens 17 eingeschoben ist. Mit den Mitnehmer 14 steht die Abstreifvorrichtung 1 in Eingriff, indem der Befestigungsbolzen 10 der oberen Abstreifplatte 2a durch Druck des Federelements 11 auf die kürzere Anstellstange 6 in die Führungsaussparung 19 gedrückt wird. Gleichzeitig liegt die Abstreifplatte 2a mit ihrer Abstreifkante am Außenmantel der oberen Druckwalze 12a an, wobei sie mit der an der Mantelfläche anliegenden Tangentialebene 30 den Anstellwinkel α einschließt. Aufgrund des synchron bzw. gekoppelt mit der oberen Druckwalze 12a bewegten Mitnehmers 14 wird in der Stellung nach Fig. 3 für einen vom Transportband 25 ankommenden Teigblock ein ausreichend großer Einzugsbereich offengehalten, damit der Teig nicht an der oberen Abstreiferplatte 2a ansteht.

Gemäß Fig. 4 ist die obere Druckwalze 2a und die damit gekoppelte Mitnehmerplatte 14 längs der Spalt-Verstellbewegung 28 zur Verminderung bzw. Eliminierung des Spaltes 13 nach unten bewegt. Gleichzeitig ist die kürzere Anstellstange 6 gegen die Druckkraft des Federelements 11 aufgrund des Eingriffs über den Befestigungsbolzen 10 an der oberen Abstreifplatte 2a nach unten verschwenkt. Der konstante Anstellwinkel α ist dabei dadurch gewährleistet, daß dem Zwischenglied 9 mit der daran befestigten oberen Abstreifplatte 2a ebenfalls eine Schwenkbewegung erteilt wird, die gegenüber der kürzeren Stange 6 im entgegengesetzten Drehsinn verläuft. Diese Ausgleichsschwenkbewegung des Zwischenglieds 9 um dessen Schwenkscharnier 8 ist aus einem genauen Vergleich der Winkelstellungen in Fig. 3 und 4 ersichtlich. Gleichzeitig ist es möglich, den oberen Abstreifer 2a entsprechend dem vollen Verstellbereich der oberen Druckwalze 12a zu bewegen.

Das Druckfederelement 11 hat die Aufgabe, sowohl die oberen als auch die unteren Abstreifplatten 2a bzw. 2b um die Schwenk- bzw. Drehscharniere 8 bzw. 7 an die Mantelflächen der Druckwalzen zu pressen, sowie die obere Abstreiferplatte 2a mit seinem als Führungs- bzw. Tastglied dienenden Befestigungsbolzen 10 in der Führungsaussparung 19 der Mitnehmerplatte 14 zu halten. Über das Hebelgestänge 4, 6 wird der Federweg des Druckfederelements 11 gegenüber dem gesamten Verstellweg der oberen Druckwalze 2a verkleinert. Das Drehmoment, aus den die Anpreßkraft für die Abstreiferplatten resultiert, wird annähernd konstant gehalten, indem einerseits der wirksame Hebelarm L zwischen der Gelenkstelle 5 beider Anstellstangen 4, 6 und den Angriffsstellen des Federelements beim Übergang von der Stellung nach Fig. 3 zu der nach Fig. 4 verringert wird, und andererseits beim genannten Übergang die Auslenkung des Druckfederelements und damit deren ausgeübte Federkraft entsprechend erhöht wird.

Bei der erfindungsgemäßen Anordnung läßt sich die Abstreifvorrichtung 1 zu Reinigungs- oder Wartungsarbeiten wie folgt aus der Teigwalzmaschine ausbauen: die obere Abstreifplatte 2a wird durch Druck etwa in Richtung A (vgl. Fig. 3), wobei das Druckfederelement 11 zusammengedrückt bzw. ausgelenkt wird, entlang dem Längsabschnitt 20 der Führungsaussparung 19 bewegt und dann durch deren Eintritts- bzw. Austrittsöffnung 21 hindurch ausgehängt; anschließend kann der untere Abstreifer 2b aus den Längsschlitzen 15 im Flacheisen 17 herausgezogen werden. Der Einbau erfolgt in umgekehrter Reihenfolge entsprechend.

## Patentansprüche

1. Abstreifvorrichtung für Teigwalzmaschinen, mit zwei Abstreifern (2a, 2b), die je an einer Anstellstange (4, 6) angelenkt (7, 8) und mittels Federkraft (11) an je eine von einem Paar Druckwalzen (12a, 12b), die einen gemeinsamen Teig-Durchgangsspalt (13) verstellbar begrenzen, zu deren Reinigung anlegbar sind, dadurch gekennzeichnet, daß die beiden Abstreifer (2a,2b) über ihre jeweiligen Anstellstangen (4, 6) durch eine Gelenkstelle (5) miteinander verbunden sind, die für die beiden Abstreifer (2a, 2b) eine gemeinsame Schwenkachse zum Anlegen an die jeweilige Druckwalze (12a, 12b) bildet.

2. Abstreifvorrichtung nach Anspruch 1, dadurch gekennzeichnet, daß die Federkraft (11) an je einer der aneinandergelenkten Anstellstangen (4, 6) zu deren Verschwenkung relativ zueinander in Angriff gebracht ist.

3. Abstreifvorrichung nach Anspruch 1 oder 2, dadurch gekennzeichnet, daß zur Ausübung der Federkraft ein Federelement (11) vorgesehen ist, das mit seinen beiden Enden an je einer der beiden Anstellstangen (4,6) in Angriff gebracht ist und auf der dem Walzen-Durchgangsspalt (13) zugeordneten Seite verläuft.

4. Abstreifvorrichtung nach Anspruch 3, dadurch gekennzeichnet, daß der Angriffspunkt (32) des Federelements (11) näher zur Gelenkstelle (5) als zum Abstreifer (2a) angeordnet ist.

5. Abstreifvorrichtung nach einem der Ansprüche 1 bis 4, gekennzeichnet durch ein für Belastung auf Druck ausgebildetes Federelement (11), das an je einer Anstellstange (4, 6) angelenkt zu deren Auseinanderspreizen angreift.

6. Abstreifvorrichtung nach einem der Ansprüche 1 bis 5, dadurch gekennzeichnet, daß der Abstreifer (2a) an einem Zwischenglied (9) ortsfest angebracht (10) ist, das an der zugeordneten Anstellstange (6) angelenkt ist.

7. Abstreifvorrichtung nach Anspruch 6, dadurch gekennzeichnet, daß die Anlenkung des Zwischengliedes (9) und der Anstellstangen (4, 6) aneinander jeweils durch Scharniergelenke (8, 5) realisiert ist, deren Achsen parallel zueinander und/oder zu den Walzenachsen (18) verlaufen.

8. Abstreifvorrichtung nach einem der vorherigen Ansprüche, dadurch gekennzeichnet, daß der Abstreifer (2a, 2b) ein parallel oder quer zur Gelenk- und/oder Walzenachse vorspringendes, gleit- oder rollbares Tast- oder Führungselement (10, 29) beispielsweise in Form eines Bolzens oder Steges aufweist.

9. Teigwalzmaschine, mit zwei einen gemeinsamen Durchgangsspalt (13) verstellbar begrenzenden Druckwalzen (12a, 12b), mit zwei paarweise zusammengefaßten Abstreifern (2a, 2b) einer Abstreifvorrichtung nach einem der vorhergehenden Ansprüche, wobei die Abstreifer (2a, 2b) je an eine der beiden Druckwalzen (12a,12b) zu deren Reinigung anlegbar sind, und mit einem parallel und/oder synchron zum Spalt-Verstellhub (28) einer Walze (12a, 12b) geführten Mitnehmer (14) für den dieser Walze zugeordneten Abstreifer (2a, 2b), dadurch gekennzeichnet, daß der Mitnehmer (14) auf der Achse (18) der Walze (12a, 12b) drehgelagert ist.

10. Teigwalzmaschine nach Anspruch 9, dadurch gekennzeichnet, daß der Mitnehmer (14) eine Raste (19) für den Eingriff durch den Abstreifer (2a) oder durch eine den Abstreifer (2a) tragendes Gestänge oder Bolzen (6, 9, 10) aufweist.

11. Teigwalzmaschine nach Anspruch 9 oder 10, dadurch gekennzeichnet, daß der Mitnehmer (14) als Platte ausgeführt ist, die über einen oder mehrere lineare Führungsschienen und/oder angelenkte Führungshebel (27) relativ zum Maschinengehäuse (16) längsbewegbar ist.

12. Teigwalzmaschine nach einem der Ansprüche 9 bis 11, gekennzeichnet durch eine Führungsaussparung (19) des Mitnehmers (14), in die eine Tast- oder Führungselement (10) des zugeordneten Abstreifers (2a) mit Spiel aufnehmbar ist.

13. Teigwalzmaschine nach Anspruch 12, dadurch gekennzeichnet, daß die Führungsaussparung (19) nach außen offen ist, einen in Federkraftrichtung verlaufenden Längsabschnitt (20) und einen im Eintrittsbereich die Öffnung (21) verengend vorspringenden Einrastzapfen (22) oder -haken aufweist.

14. Teigwalzmaschine nach einem der Ansprüche 9 bis 13, gekennzeichnet durch eine quer zur Walz- und/oder Gelenkachse verlaufende Längsführung (15) am Maschinengehäuse, mit der ein Führungselement (29) des an einer Walze (12b) anliegenden Abstreifers (2b) in Eingriff bringbar ist.

## Claims

1. Scraper device for dough-rolling machines, having two scrapers (2a, 2b), which are coupled (7, 8) to a respective adjusting rod (4, 6) and can be applied by spring force (11) to one of a pair of pressure rollers (12a, 12b) respectively, which rollers adjustably define a common gap (13) for the passage of the dough, characterised in that the two scrapers (2a, 2b) are connected together via their respective adjusting rods (4, 6) at a pivotal point (5), which forms for the two scrapers (2a, 2b) a common pivotal axis for applying to the respective pressure roller (12a, 12b).

2. Scraper device according to claim 1, characterised in that the spring force (11) is applied to a respective one of the mutually coupled adjusting rods (4, 6) in order to effect their pivoting relative to one another.

3. Scraper device according to claim 1 or 2, characterised in that in order to exert the spring force, a spring element (11) is provided, whose two ends are applied to respective adjusting rods (4, 6) and which extends on the side associated with the roller gap (13).

4. Scraper device according to claim 3, characterised in that the point of application (32) of the spring element (11) is located closer to the pivotal point (5) than to the scraper (2a).

5. Scraper device according to one of claims 1 to 4, characterised by a spring element (11) which is adapted to act by pressure and which, coupled to the two adjusting rods (4, 6), pushes them apart.

6. Scraper device according to one of claims 1 to 5, characterised in that the scraper (2a) is rigidly mounted (10) on an intermediate member (9) which is coupled to the associated adjusting rod (6).

7. Scraper device according to claim 6, characterised in that the coupling together of the intermediate member (9) and the adjusting rods (4, 6) is effected by hinge joints (8, 5) in each case, whose axes extend parallel to one another and/or to the roller axes (18).

8. Scraper device according to one of the preceding claims, characterised in that the scraper (2a, 2b) has a sliding or rolling sensor or guide element (10, 29), e.g. in the form of a pin or web, projecting parallel or transverse to the hinge and/or roller axis.

9. Dough-rolling machine, having two pressure rollers (12a, 12b) adjustably defining a common gap (13), having two scrapers combined as a pair (2a, 2b) of a scraper device according to one of the preceding claims, wherein the scrapers (2a, 2b) can be applied to a respective one of the two pressure rollers (12a, 12b) for cleaning, and having a driver (14) guided in parallel and/or synchronously with the gap adjustment stroke (28) of a roller (12a, 12b) for the scraper (2a, 2b) associated with this roller, characterised in that the driver (14) is rotatably mounted on the axis (18) of the roller (12a, 12b).

10. Dough-rolling machine according to claim 9, characterised in that the driver (14) has a catch (19) for engagement by the scraper (2a) or by a linkage supporting the scraper (2a) or bolts (6, 9, 10).

11. Dough-rolling machine according to claim 9 or 10, characterised in that the driver (14) is formed as a plate which is longitudinally movable relative to the machine housing (16) via one or more linear guide rails and/or coupled guide levers (27).

12. Dough-rolling machine according to one of claims 9 to 11, characterised by a guide recess (19) of the driver (14), into which a sensor or guide element (10) of the associated scraper (2a) is receivable with clearance.

13. Dough-rolling machine according to claim 12, characterised in that the guide recess (19) is open to the outside, has a longitudinal section (20) extending in the direction of the spring force and a catch pin (22) or hook projecting in the inlet region so as to narrow the aperture (21).

14. Dough-rolling machine according to one of claims 9 to 13, characterised by a longitudinal guide (15) located on the machine housing and extending transverse to the rolling and/or hinge axis, with which longitudinal guide a guide element (29) of the scraper (2b) abutting one roller (12b) is capable of meshing.

## Revendications

1. Dispositif de raclage pour des machines à rouler la pâte, avec deux raclettes (2a, 2b), chacune articulée (7, 8) à une barre d'application (4, 6) et susceptible d'être appliquée, au moyen de la force d'un ressort (11), à chaque rouleau d'une paire de rouleaux de pression (12a, 12b), délimitant un interstice de passage de pâte (13) commun, réglable, en vue de leur nettoyage, caractérisé en ce que les deux raclettes (2a, 2b) sont reliées ensemble, par l'intermédiaire de leurs barres d'application (4, 6) respectives, au moyen d'un emplacement d'articulation (5), constituant pour les deux raclettes (2a, 2b) un axe de pivotement commun, pour l'application au rouleau de pression (12a, 12b) respectif.

2. Dispositif de raclage selon la revendication 1, caractérisé en ce que la force du ressort (11) est appliquée à chacune des barres d'application (4, 6) articulées l'une à l'autre, en vue de produire leur pivotement l'une par rapport à l'autre.

3. Dispositif de raclage selon la revendication 1 ou 2, caractérisé en ce qu'est prévu un élément à ressort (11), pour l'exercice de la force de ressort, qui agit, avec ses deux extrémités chaque fois à l'une des deux barres d'application (4, 6), et s'étend sur le côté associé à l'interstice de passage de rouleaux (13).

4. Dispositif de raclage selon la revendication 3, caractérisé en ce que le point d'action (32) de l'élément ressort (11) est plus proche de l'emplacement d'articulation (5) que de la raclette (2a).

5. Dispositif de raclage selon l'une des revendications 1 à 4, caractérisé par un élément ressort (11), réalisé pour fonctionner par sollicitation en pression et articulé à chaque barre d'application (4, 6), en vue de produire leur écartement l'une de l'autre.

6. Dispositif de raclage selon l'une des revendications 1 à 5, caractérisé en ce que la raclette (2a) est installée localement fixe à un organe intermédiaire (9), articulé à la barre d'application (6) associée.

7. Dispositif de raclage selon la revendication 6, caractérisé en ce que l'articulation de l'organe intermédiaire (9) et des barres d'application (4, 6) les uns aux autres est chaque fois réalisée au moyen d'articulations à charnière (8, 5), dont les axes s'étendent parallèlement les uns aux autres et/ou par rapport aux axes de rouleaux (18).

8. Dispositif de raclage selon l'une des revendications précédentes, caractérisé en ce que la raclette (2a, 2b) présente un élément de palpage ou de guidage (10, 29), faisant saillie transversalement par rapport à l'axe d'articulation et/ou de rouleau et susceptible de glisser ou de rouler, se présentant par exemple sous forme d'un boulon ou d'une nervure.

9. Machine à rouler la pâte, avec deux rouleaux de pression (12, 12a), délimitant ensemble un interstice de passage (31) réglable, avec deux raclettes (2a, 2b), groupées par paire, d'un dispositif de raclage selon l'une des revendications précédentes, les raclettes (2a, 2b) étant susceptibles d'être appliquées chacune à un des deux rouleaux de pressage (12a, 12b), en vue de leur nettoyage, et avec un organe d'entraînement (14), guidé parallèlement et/ou en synchronisme par rapport à la course de réglage d'interstice (28) d'un rouleau (12a, 12b), pour la raclette (2a, 2b) associée à ce rouleau, caractérisée en ce que l'organe d'entraînement (14) est logé à rotation sur l'axe (18) du rouleau (12a, 12b).

10. Machine à rouler la pâte selon la revendication 9, caractérisée en ce que l'organe d'entraînement (14) présente un cliquet (19) pour assurer l'engagement par la raclette (2a) ou par une tringlerie ou boulon (6, 9, 10) portant la raclette (2a).

11. Machine à rouler la pâte selon la revendication 9 ou 10, caractérisée en ce que l'organe d'entraînement (14) est réalisé sous forme de plaque, déplaçable longitudinalement par rapport au carter de machine (16), par l'intermédiaire d'un ou de plusieurs rails de guidage linéaires et/ou de leviers de guidage articulés.

12. Machine à rouler la pâte selon l'une des revendications 9 à 11, caractérisée par un évidement de guidage (19) de l'organe d'entraînement (14), dans lequel un élément de palpage ou de guidage (10) de la raclette (2a) associée peut être accueilli, avec du jeu.

13. Machine à rouler la pâte selon la revendication 12, caractérisée en ce que l'évidement de guidage (19) est ouvert vers l'extérieur, présente un troncon longitudinal (20) s'étendant dans la direction de la force du ressort et présente un tourillon ou crochet d'insertion (22), faisant saillie, rétrécissant l'ouverture (21) dans la zone d'entrée.

14. Machine à rouler la pâte selon l'une des revendications 9 à 13, caractérisée par un guidage longitudinal (15), s'étendant transversalement par rapport à l'axe de rouleau et/ou d'articulation, au carter de machine, avec lequel un élément de guidage (29) de la raclette (2b) appuyant à un rouleau (12b) peut être amené en engagement.
